# FASCICULE DE BREVET EUROPEEN

(11) **EP 0 912 643 B1**
(45) Date de publication et mention de la délivrance du brevet: **17.05.2000**
(21) Numéro de dépôt: 96941689.0
(22) Date de dépôt: 02.12.1996
(51) Int. Cl.: C09C 3/12, C09C 1/36, C09C 3/06

(54) **PARTICULES TRAITEES PAR UN POLYORGANOSILOXANE FONCTIONNALISE**
MIT EINEM FUNKTIONALISIERTEN POLYORGANOSILOXAN MODIFIZIERTE TEILCHEN
PARTICLES TREATED WITH A FUNCTIONALISED POLYORGANOSILOXANE

(30) Priorité: 08.12.1995 FR 9514537
(43) Date de publication de la demande: 06.05.1999
(73) Titulaire: RHODIA CHIMIE, 92408 Courbevoie Cédex (FR)
(72) Inventeur: BOMAL, Yves, F-75018 Paris (FR); GUEZ, Anny, F-75017 Paris (FR); VELLERET, Gérard, F-75011 Paris (FR)
(74) Mandataire: Fabre, Madeleine-France
(86) Numéro de dépôt international: FR9601909
(87) Numéro de publication internationale: WO9721774

(56) Documents cités:
- EP-A- 0 029 137
- EP-A- 0 141 174
- EP-A- 0 506 290
- EP-A- 0 522 916
- EP-A- 0 684 291
- WO-A-96/16125
- US-A- 3 849 152
- US-A- 3 948 676
- US-A- 4 394 469
- DATABASE WPI Week 8334 Derwent Publications Ltd., London, GB; AN 83-744505 XP002012790 & JP 58 120 519 A (HAMADA) , 18 Juillet 1983
- DATABASE WPI Week 8935 Derwent Publications Ltd., London, GB; AN 89-251891 XP002012791 & JP 01 182 368 A (SHISEIDO) , 20 Juillet 1989
- DATABASE WPI Week 9428 Derwent Publications Ltd., London, GB; AN 94-230757 XP002012792 & JP 06 166 829 A (SHOKUBAI KASEI KOGYO) , 14 Juin 1994
- DATABASE WPI Week 8833 Derwent Publications Ltd., London, GB; AN 88-231710 XP002012793 & JP 63 165 461 A (SHISEIDO) , 8 Juillet 1988

## Description

La présente invention concerne de nouvelles particules traitées pouvant être en particulier utilisées dans les matières thermoplastiques.

Les particules minérales utilisées comme pigments dans les matières plastiques sont en général introduites sous forme pulvérulente dans les mélanges de polymères pour plastiques. Cependant, cette introduction sous forme pulvérulente nécessite un appareillage particulier dont ne sont pas toujours équipés les fabricants de plastiques.

Pour remédier à cet inconvénient, il est possible d'utiliser des particules sous forme de mélanges maîtres qui sont des mélanges de polymère(s) thermoplastique(s) et de particules en proportion élevée. Il suffit au fabricant de plastiques à qui est vendu le mélange maître de diluer ledit mélange dans une plus grande quantité de polymère(s) pour obtenir la teneur désirée en particules et préparer des plastiques.

L'avantage de ces mélanges maîtres est qu'ils présentent une plus grande facilité de manipulation que les particules sous forme pulvérulente.

Cependant, la fabrication même de ces mélanges maîtres nécessite des appareils d'agitation de forte puissance consommant une grande énergie pour pouvoir incorporer les particules dans les polymères. Afin d'améliorer le mouillage des particules par les polymères, il a été proposé de traiter les particules par exemple par des silicones type polydiméthylsiloxane (PDMS).

Les mélanges maîtres de particules traitées par de tels produits qui sont actuellement sur le marché présentent une concentration en particules ne dépassant pas 70 % en poids. Des concentrations plus élevées en particules ne peuvent être obtenues avec les particules de rart antérieur qu'en utilisant des additifs (polyéthylène, carboxylates, ...) permettant d'améliorer l'introduction des charges dans le mélange de polymères et à l'aide d'appareils d'agitation nécessitant la mise en oeuvre d'une grande énergie d'où un procédé de préparation peu rentable industriellement.

Un but de la présente invention est de proposer de nouvelles particules pour la préparation de mélanges maîtres présentant une concentration en particules plus élevée que les mélanges maîtres de l'art antérieur.

Un autre but est de proposer de nouvelles particules permettant la préparation de mélanges maîtres à l'aide d'une quantité d'énergie faible.

Dans ce but, l'invention concerne tout d'abord des particules minérales, à l'exception de la silice, comprenant au moins un polyorganosiloxane fonctionnalisé greffé sur tout ou partie de leur surface, ledit polyorganosiloxane étant fonctionnalisé par :
- au moins un groupe alcoxy,
- et au moins un groupe organique W choisi parmi les alkyles, les alkényles, les mercaptoalkyles, les sulfoxydes, les époxy, les groupes (meth)acryloxy, les groupes amino, les groupes hydroxyle, les groupes siloxy, les éthers, les cétones, les esters, les phosphorés, des parties de polymères comprenant des unités récurrentes aromatiques vinyliques, éthers, amides ou sulfuriques.

L'invention concerne aussi des procédés de préparation de ces particules.

L'invention concerne également une composition comprenant des particules selon l'invention et au moins un polymère thermoplastique.

L'invention concerne en outre l'utilisation des particules selon l'invention dans les polymères thermoplastiques.

Enfin, l'invention concerne les objets obtenus à partir de polymères thermoplastiques et comprenant des particules selon l'invention.

L'invention concerne tout d'abord des particules minérales, à l'exception de la silice, comprenant au moins un polyorganosiloxane greffé sur tout ou partie de leur surface, ledit polyorganosiloxane étant fonctionnalisé par :
- au moins un groupe alcoxy,
- et au moins un groupe organique choisi parmi les alkyles, les alkényles, les mercaptoalkyles, les sulfoxydes, les époxy, les groupes (meth)acryloxy, les groupes amino, les groupes hydroxyle, les groupes siloxy, les éthers, les cétones, les esters, les phosphorés, des parties de polymères comprenant des unités récurrentes aromatiques vinyliques, éthers, amides ou sulfuriques.

L'invention porte donc sur des particules traitées en surface par un polyorganosiloxane qui doit présenter au moins deux fonctionnalités. La première est une fonction alcoxy et la deuxième peut présenter une nature assez variée. Le polyorganosiloxane greffé peut présenter une ou plusieurs fonctions du deuxième type.

Selon l'invention, le polyorganosiloxane fonctionnalisé pouvant être greffé à la surface des particules comprend, par molécule :
- α - d'une part, au moins un motif siloxyle fonctionnel de formule **(I)**:

   **(I)** Rₐ Y Si (O)_{(3-a)/2}

   dans laquelle :
   * a = 0 ou 1, et de préférence 1,
   * R est un radical hydrocarboné monovalent choisi parmi les alkyles linéaires ou ramifiés, ayant de 1 à 6 atomes en particulier le méthyle, l'éthyle, le propyle, le butyle et/ou parmi les aryles et en particulier le phényle, le méthyle étant plus particulièrement préféré, les radicaux R étant identiques ou différents quand a = 2.
   * Y est un radical alcoxyle linéaire ou ramifié choisi, de préférence, parmi les alcoxyles en C₁-C₄, en particulier le méthoxyle, l'éthoxyle et le (iso)propoxyle étant plus particulièrement retenus,
- β - et d'autre part, au moins un motif siloxyle fonctionnel de formule **(II)** :

   **(II)** R_{b} W Si (O)_{(3-b)/2}

   dans laquelle :
   * b = 0, 1 ou 2,
   * R répond à la même définition que celle donnée supra pour le substituant R du motif (I) et peut être identique ou différent de ce dernier,
   * W est un radical hydrocarboné monovalent ayant de 2 à 30 atomes de carbone et éventuellement des atomes de S et/ou O et constituant un reste fonctionnel, relié au silicium par une liaison Si-C, ce reste étant choisi parmi les groupes suivants :

   **(i)** un groupe alkyle, linéaire ou ramifié, comprenant au moins 7 atomes de carbone,
   **(2i)** un groupe alkényle en C₂-C₂₀, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en a et avantageusement constitué par un étheroxyde ou un thioéther,
   **(3i)** un groupe mono ou bicyclique aliphatique insaturé comportant 5 à 20 atomes de carbone cycliques et une ou deux double(s) liaison(s) éthyléniques dans le cycle éventuellement substituée(s) par un ou deux groupe(s) alkyle(s) linéaire(s) ou ramifiée(s) en C₁-C₃, ledit groupe cyclique étant éventuellement relié au silicium par l'intermédiaire d'un radical alkylène linéaire ou ramifié en C₂-C₁₀,
   **(4i)** un groupe mercaptoalkyle de formule :

      **(4i)** ―R¹―S―A

      dans laquelle :
      * R¹ représente un radical alkylène en C₂-C₁₀, linéaire ou ramifié, comprenant éventuellement au moins un hétéroatome oxygéné ou un radical alkylène-cycloalkylène dont la partie alkylène a la même définition que celle donnée juste ci-avant et la partie cyclique comporte 5 à 10 atomes de carbone et est éventuellement substituée par un ou deux groupe(s) alkyle(s) linéaire(s) ou ramifié(s) en C₁-C₃,
      * A correspond :
         → soit à l'hydrogène,
         → soit à un groupement M masquant relié à S par une liaison labile dans des conditions données et permettant le remplacement de M par H ou la création d'une espèce active -R¹-S·;
   **(5i)** un groupe comprenant une entité polysulfurique et répondant à la formule suivante :

      ―R²―(-S-)ₓ―R³ (5i)

      avec :
      * x = 1 à 6,
      * R² ayant la définition que R supra,
      * R³ est un alkyle en C₁-C₁₀ linéaire ou ramifié,
   **(6i)** un groupe comportant au moins un cycle, dont au moins l'un des éléments est un atome de soufre, et répondant aux formules ci-dessous : 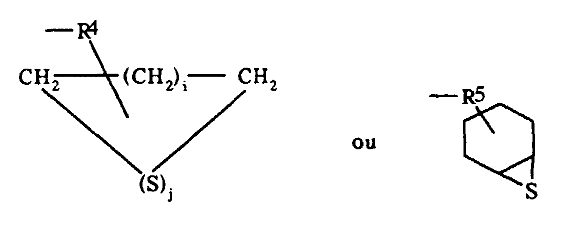 dans lesquelles
      * i= 0,1 ou 2 et j = 1 à 6
      * les substituants R⁴ et R⁵ sont des radicaux divalents tels que définis supra pour R,
   **(7i)** un groupe sulfoxyde de formule : 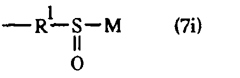 dans laquelle le symbole R¹ et M ont les définitions données ci-avant pour la formule (4i) ;
- γ - et éventuellement au moins un motif résiduel siloxyle de formule **(III)**:

   **(III)** R_{c} Hd Si (O)_{(4-(c+d))/2}

   dans laquelle :
   * c = 0, 1, 2 ou 3, d = 0 ou 1 et c + d ≤ 3
   * les substituants R étant tels que définis ci-dessus dans les motifs **(I)** et **(II)**.

Dans ce type de polyorganosiloxane, la première fonctionnalité Y alcoxyle est portée par les motifs de formule **(I)** tandis que la deuxième fonctionnalité W hydrocarboné apparaît dans les motifs de formule **(II)** définis ci-dessus.

Le premier type de polyorganosiloxane fonctionnalisé peut comporter, outre les motifs **(I)** et **(II)**, au moins un motif résiduel **(III)**.

Selon une terminologie usuelle dans les silicones, ces motifs **(I)** et **(II)** peuvent être des motifs D mais également T. Dans le cas où des motifs T sont présents, les polyorganosiloxanes se présentent sous forme de chaînes linéaires réticulées entre elles.

Il convient de souligner que dès lors qu'un motif d'un type donné (**I, II** ou **III** e.g.), est présent dans le polyorganosiloxane fonctionnalisé à plus d'un exemplaire, les différents exemplaires peuvent être identiques ou différents entre eux.

Compte tenu des valeurs que peuvent prendre les indices a à d attribués aux substituants dans les motifs **(I), (II), (III)**, on doit comprendre que les polyorganosiloxanes fonctionnalisés selon le premier type peuvent présenter une structure linéaire et/ou ramifié et/ou cyclique.

Les radicaux R préférés sont : le méthyle, l'éthyle, le n-propyle, l'isopropyle ou le n-butyle, de préférence le méthyle. Plus préférentiellement encore, au moins 80 % en nombre des radicaux R sont des méthyles.

Les radicaux alcoxyles Y préférés sont les éthoxyles.

Le substituant W du motif **(II)** du premier type de polyorganosiloxane peut être en particulier choisi parmi les radicaux suivants :
- un radical alkyle **(i)** comprenant de 8 à 30 atomes de carbone et choisi de préférence parmi les radicaux alkyles suivants : octyle, dodécyle, undécyle, tridécyle ;
- un radical **(2i)** en C₆-C₁₀, comportant une double liaison, et éventuellement une autre conjuguée à la première, ledit radical étant avantageusement l'hexènyle ou le dodécènyle;
- un radical **(3i)** monocyclique en C₅-C₆, de préférence le cyclohexènyle ou le méthyl-1 cyclohexène-1 yle, éventuellement relié au silicium par l'intermédiaire d'un radical alkylène linéaire ou ramifié en C₂-C₆, de préférence -CH₂-CH₂-, -CH₂-CH(CH₃)-, -(CH₂)₃-.

Pour être encore plus précis sur le premier type de polyorganosiloxanes fonctionnalisés concernés, on mentionne tout d'abord ceux formés par des copolymères linéaires statistiques, séquencés ou à bloc, de formule moyenne suivante **(lV)** : 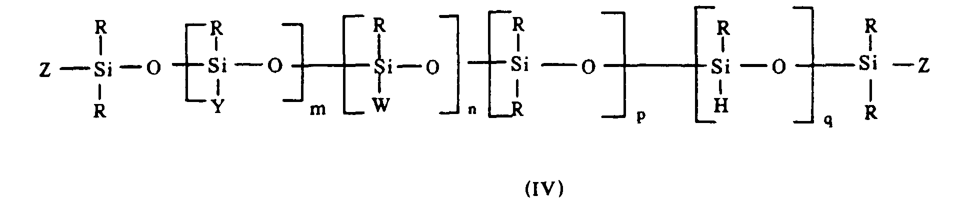 dans laquelle :
- les symboles Y, W et R sont tels que définis précédemment,
- le symbole Z est un radical monovalent choisi parmi les radicaux formés par l'hydrogène et parmi ceux répondant aux définitions de R, Y et W,
- la somme m + n + p + q ≥ 3, de préférence comprise entre 3 et 100 ; le cas de figure dans lequel p = q = 0, m ≥ 1 et n ≤ 50 étant plus particulièrement préféré,
- 0 < m ≤ 100, de préférence 1 ≤ m ≤ 50
- 0 < n ≤ 100, de préférence 1 ≤ n ≤ 50
- 0 ≤ p ≤ 20, de préférence 0 ≤ p ≤ 10
- 0 ≤ q ≤ 40, de préférence 0 ≤ q ≤ 20

Parmi les polyorganosiloxanes fonctionnalisés de formule **(IV)**, plus particulièrement préférés, on peut citer ceux pour lesquels p = q = 0 et 0,1 ≤ m/n ≤ 5, de préférence 1 ≤ m/n ≤ 5 et plus préférentiellement 1,5 ≤ m/n ≤ 3.

Une alternative à la structure linéaire des polymères de formule **(IV)** définis ci-dessus, se rapporte aux polyorganosiloxanes fonctionnalisés constitués par des copolymères cycliques de formule moyenne suivante **(V)**: 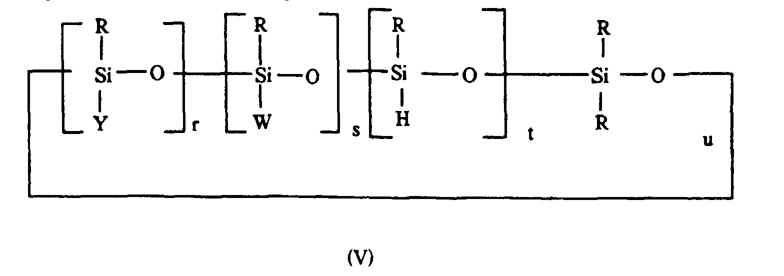 dans laquelle Y, W et R sont tels que définis précédemment, et avec r, s, t et u représentant des nombres entiers ou décimaux positifs :
- la somme r + s + t + u ≥ 3, de préférence comprise entre 3 et 8, le cas de figure dans lequel t = u = 0 étant plus particulièrement préféré,
- 1 ≤ r ≤ 8, de préférence 1 ≤ r ≤ 4
- 1 ≤ s ≤ 8, de préférence 1 ≤ s ≤ 4
- 0 ≤ t ≤ 8, de préférence 0 ≤ t ≤ 4
- 0 ≤ u ≤ 8, de préférence 0 ≤ u ≤ 4.

De préférence, les polyorganosiloxanes sont constitués par des produits correspondants à ceux pour lesquels R = CH₃ et p = u = 0 dans les formules **(IV)** et **(V)** définies ci-dessus.

Il va de soi que dans ces formules **(IV)** et **(V)**, comme déjà indiqué ci-dessus, les radicaux W peuvent être de nature identique ou différente quand n > 1 et s > 1.

Les mélanges de polyorganosiloxanes fonctionnalisés du type de ceux définis ci-dessus, rentrent dans le cadre de la présente invention.

Les polyorganosiloxanes fonctionnalisés du premier type tels que décrits ci-avant peuvent être obtenus par le procédé qui consiste à :
- d'une part, faire réagir un polyorganosiloxane de départ comprenant des motifs de formule **(II)** tels que définis supra, dans lesquels W représente l'hydrogène, avec au moins un alcool dont dérive la fonctionnalité Y du motif **(I)**, et utile à la fois comme réactif et comme solvant réactionnel, en présence d'un catalyseur dont au moins l'un des éléments actifs est choisi parmi les métaux de transition, selon un mécanisme de déshydrogénocondensation (1ère phase),
- et d'autre part, mettre en oeuvre l'addition du polyorganosiloxane transformé par déshydrogénocondensation sur au moins un composé oléfinique dont dérive la fonctionnalité W du motif **(II)** selon un mécanisme d'hydrosilylation (2ème phase), en présence d'un catalyseur et de préférence à une température comprise entre 5 et 100 °C et plus préférentiellement encore entre 20 et 90 °C.

L'une des originalités de ce procédé réside dans l'utilisation de l'alcool correspondant au groupement Y, à la fois comme réactif et comme solvant réactionnel dans l'étape de déshydrogénocondensation. Selon ce procédé, quelle que soit la quantité d'alcool utilisée, il n'est pas possible de transformer toutes les fonctions SiW avec W = H du polyorganosiloxane de départ. Ainsi, après un certain taux de conversion limite, qui varie selon les conditions réactionnelles la stoechiométrie et la nature des réactifs, les SiH résiduels deviennent inactifs vis-à-vis de la déshydrogénocondensation. Par exemple, en présence d'éthanol, le taux de transformation des fonctions SiH initiales, plafonne à 66 %.

Cette déshydrogénocondensation originale conduit donc à un polyorganosiloxane comportant au moins une fonctionnalité rapportée et des fonctions SiH libres, et permettant d'accéder au polyorganosiloxane multifonctionnel, comme décrit dans ce qui suit.

De façon privilégiée, les alcools mis en oeuvre sont des alcanols linéaires ou ramifiés monohydroxylés (primaire, secondaire, ou tertiaire, de préférence primaire), choisis de préférence parmi la liste suivante : méthanol, éthanol, (iso)propanol, (n)butanol, l'éthanol étant préféré.

Concernant le catalyseur, il est avantageusement choisi parmi ceux contenant au moins l'un des éléments suivants : Pt, Rh, Ru, Pd, Ni et leurs associations, ce catalyseur étant éventuellement couplé à un support inerte ou non.

Le catalyseur peut avantageusement être pris dans la famille des catalyseurs au platine utilisés traditionnellement pour réaliser des réactions d'hydrosilylation. Ces catalyseurs platiniques sont amplement décrits dans la littérature. On peut en particulier citer les complexes du platine et d'un produit organique décrits dans les brevets américains US-A-3 159 601, US-A-3 159 602, US-A-3 220 972 et les brevets européens EP-A-57 459 EP-188 978 et EP-A-190 530 ainsi que les complexes du platine et d'organopolysiloxane vinylé décrit dans les brevets américains US-A-3 419 593, US-A-3 715 334, US-A-3 377 432 et US-A-3 814 730. Le catalyseur de karstedt est un exemple de catalyseur platinique approprié pour le procédé selon l'invention. (Brevet US-A-3 775 452 Karstedt).

Les catalyseurs à base de nickel, comme par exemple le nickel de raney, constituent une alternative possible aux catalyseurs platiniques.

S'agissant des conditions réactionnelles, la désydrogénocondensation peut être réalisée dans une large gamme de température allant, par exemple, de 0 à 200 °C, mais il est clair que l'on préfère qu'elle s'effectue à une température comprise entre 20 et 80 °C de préférence entre 40 et 70°C.

La deuxième phase du procédé consiste en une réaction d'addition du polyorganosiloxane intermédiaire hydrogéné et produit par deshydrogénocondensation, sur au moins un composé oléfinique porteur d'au moins une liaison π.

Il s'agit d'un mécanisme d'hydrosilylation, en présence d'un catalyseur et, de préférence, à une température comprise entre 5 et 100 °C et plus préférentiellement encore entre 20 et 90 °C.

Selon une méthodologie préférée, on initie l'hydrosilylation en ajoutant le composé oléfinique dont dérive le radical W tel que défini ci-dessus, au polyorganosiloxane alcoxylé intermédiaire une fois que la déshydrogénocondensation est terminée. En pratique, cet ajout peut se faire lorsque le dégagement d'hydrogène a cessé.

L'alcène réactif peut être formé par un mélange de produits comportant une seule ou plusieurs espèces précurseurs de radicaux W, qui déterminent la multifonctionnalité du polyorganosiloxane final. Dans le cas où l'on prévoit plusieurs espèces W, on laisse, de préférence, d'abord réagir l'alcène correspondant à la seconde fonctionnalité, puis une fois que celui-ci a totalement réagi, on incorpore l'alcène correspondant à la troisième fonctionnalité et ainsi de suite.

Au lieu d'être incorporé au milieu réactionnel après la déshydrogénocondensation, le composé oléfinique précurseur de W peut être mis en oeuvre avant que ne débute cette première phase du procédé, ou bien encore pendant celle-ci.

Selon une mise en oeuvre préférée du procédé, on fait en sorte que l'hydrosilylation soit catalysée par au moins une partie du catalyseur de déshydrogénocondensation et, de préférence, exclusivement par ce catalyseur.

Les composés oléfiniques mis en oeuvre, peuvent être aisément déduits de la définition de W donnée ci-avant. Le choix quant à ce radical est déterminé par les applications visées (une ou plusieurs fonctionnalités différentes).

La phase d'hydrosilylation peut se dérouler, avantageusement, à température ambiante et en masse ou en solution, par exemple dans l'alcool qui a servi de solvant et de réactif à la réaction de déshydrogénocondensation.

En fin de réactions, les polyorganosiloxanes bruts qui sont obtenus peuvent être purifiés notamment par passage sur une colonne remplie d'une résine échangeuse d'ions et/ou par simple dévolatilisation des réactifs introduits en excès et éventuellement du solvant mis en oeuvre, par un chauffage opéré entre 100 et 180 °C sous pression réduite.

Avantageusement, le polyorganosiloxane de départ est sélectionné parmi ceux répondant à la formule suivante **(VI)** : 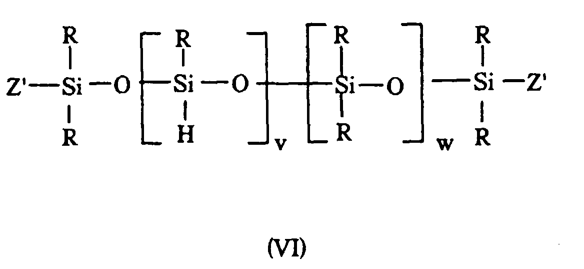 dans laquelle :
- les symboles R sont identiques ou différents et sont tels que définis supra en légende à la formule des motifs **(I)** et **(Il)**,
- les symboles Z' sont identiques ou différents et correspondent à R ou à l'hydrogène,
- v est un entier ou un décimal ≥ 0 définissable comme suit : v = n + m + q ; n, m et q répondant aux définitions données supra en légende de la formule **(IV)**, avec la condition selon laquelle si v = 0, alors w ≥ 1 et les deux radicaux Z' correspondent à l'hydrogène,
- w répond à la même définition que celle de p donnée supra en légende de la formule **(IV)**.

Les polyorganosiloxanes de départ servant, par exemple, à la préparation des produits fonctionnalisés cycliques sont ceux sélectionnés parmi ceux répondant à la formule moyenne suivante **(VII)**: 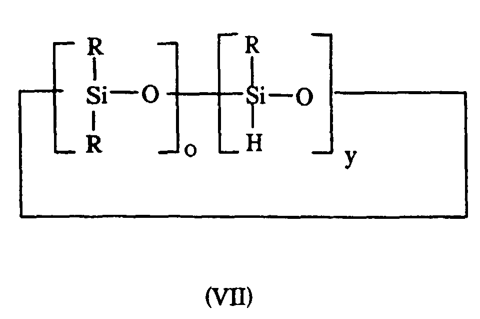 dans laquelle :
- les symboles R sont identiques ou différents et sont tels que définis supra, en légende à la formule des motifs **(I)** et **(Il)**,
- o répond à la même définition que celle de u donnée supra, en légende de la formule **(V)**,
- y est un entier ou un décimal > 0, définissable comme suit : y = r + s + t et y + u ≥ 3. r, s, t et u répondant aux définitions données supra en légende de la formule (V).

De preférence, les polyorganosiloxanes fonctionnalisés greffés à la surface des particules présentent au moins un groupement fonctionnel W qui est un groupement compatible avec un polymère thermoplastique. On entend par groupement compatible avec un polymère thermoplastique un groupement qui permet le mouillage des particules par un tel polymère ou un groupement qui présente une réactivité avec ledit polymère thermoplastique. L'homme du métier connaît les groupements compatibles avec chaque type de themoplastique.

Comme exemple de groupements W compatibles avec les polymères thermoplastiques , on peut citer :
- les alkyls en C₇ - C₁₈ compatibles avec les polyoléfines,
- les acryliques compatibles avec les PVC (polychlorures de vinyle) et les PVDF.

Selon l'invention, la teneur en poids d'une particule en polyorganosiloxane fonctionnalisé, exprimée en SiO₂, est en général d'au moins 0,1 % par rapport au poids de la particule traitée, de préférence d'au plus 5 %, encore plus préférentiellement d'au plus 3 %. Cette teneur est mesurée par fluorescence X.

A titre de variante particuière, les particules minérales utilisés dans le cadre de l'invention sont des monoparticules de même nature chimique.

En outre, les particules minérales selon rinvention peuvent être choisies parmi les particules de nature pigmentaire. A titre d'exemples non limitatifs, les particules de nature pigmentaire peuvent être les sulfures de terres rares dont le sulfure de cerium, le dioxyde de titane, l'oxyde de fer, l'oxyde de chrome, le sulfure de zinc, l'oxyde de zinc, le bleu outremer, leur mélanges, etc... De préférence, les particules sont des particules de dioxyde de titane et des particules de sulfures de terres rares, notamment les sulfures d'alcalins et d'alcalino-terreux. Il peut s'agir par exemple des particules décrites dans EP-A-0 545 746 et EP-A-0 680 930.

La taille des particules selon l'invention peut être variable selon l'application à laquelle elles sont destinées. Si l'on souhaite utiliser les particules en tant que pigments, la taille d'une particule est une taille caractérisitique d'une application pigmentaire, par exemple d'au plus 1 µm pour le dioxde de titane. Cependant, il est également possible de traiter des particules de taille inférieure, par exemple des nanoparticules présentant une taille inférieure à 100 nm et de même nature chimique que des particules pigmentaires. Les particules de taille nanométriques présentent alors elles aussi l'avantage de pouvoir être facilement incorporées dans un polymère thermoplastique.

Il s'agit d'une manière particulièrement avantageuse du dioxyde de titane. Il peut se présenter sous différentes formes cristallines et notamment sous forme rutile.

De préférence, les particules de dioxyde de titane présentent une taille comprise entre 0,2 et 0,4 µm.

Les particules selon l'invention présentent l'avantage de pouvoir être facilement incorporées dans des mélanges de polymères thermoplastiques à teneur élevée en particules sans qu'il y ait besoin de moyens d'agitation de forte puissance.

L'invention concerne aussi des procédés de préparation des particules selon l'invention.

Un premier mode de préparation consiste à réaliser les étapes suivantes :
- on met en suspension des particules minérales dans le polyorganosiloxane fonctionnalisé,
- on filtre les particules,
- on sèche, et on micronise éventuellement, les particules.

La suspension de particules peut présenter une concentration variée pouvant aller jusqu'à 900 g/l.

Le polyorganosiloxane fonctionnalisé peut être utilisé pur ou en solution. Le solvant de la solution de poylorganosiloxane fonctionnalisé peut être choisi parmi : les organopolysiloxanes cycliques volatils (octaméthylcyclotétrasiloxane, décaméthylcyclopentasiloxane, ...), les huiles polydiméthylsiloxanes courtes (viscosité inférieure à 100 mPa.s), l'hexaméthyldisiloxane, les cétones (méthyléthylcétone, ...), les éthers (éther diéthylique, ...), les esters (myristate d'isopropyle, acétate d'éthyle, ...), certains solvants chlorés ou chlorofluorés (chlorure de méthylène, chloroforme, ...), les paraffines très ramifiées (huiles blanches à base d'isoalcanes et de cycloalcanes, ...), les alcools.

Après avoir réalisé cette dispersion, les particules sont filtrées et séchées à une température de l'ordre de 100 °C.

Enfin, les particules sont éventuellement micronisées au diamètre final souhaité.

Selon un deuxième mode de préparation des particules selon l'invention, on réalise les étapes suivantes :
- on pulvérise le polyorganosiloxane fonctionnalisé sur des particules minérales,
- on sèche, et on micronise éventuellement, les particules.

Là encore, le polyorganosiloxane peut être utilisé seul ou en solution. Dans ce dernier cas, la solution de polyorganosiloxane est de même nature que celle du premier mode de préparation. Le polyorganosiloxane est pulvérisé sur les particules qui se présentent sous forme de poudre.

Les particules sont ensuite séchées de la même manière que dans le premier mode de préparation.

Selon un troisième mode de préparation des particules, on micronise des particules minérales en introduisant le polyorganosiloxane fonctionnalisé dans les buses de micronisation.

Le polyorganosiloxane peut encore être utilisé seul ou en solution. La solution de polyorganosiloxane utilisée est la même que dans les modes précédents de préparation.

Les particules selon l'invention peuvent également être préparées par un procédé de lit fluidisé ou encore à l'aide d'un évaporateur rotatif.

Selon une variante des procédés précédents, les particules à traiter par le polyorganosiloxane fonctionnalisé peuvent présenter des groupements hydroxyles à leur surface. Ces groupements peuvent permettre un meilleur greffage du polyorganosiloxane fonctionnalisé sur les particules. Ces groupements peuvent être présents à la surface des particules de par la nature des particules. Les particules à traiter par le polyorganosiloxane fonctionnalisé peuvent également présenter un traitement de surface à base de composés inorganiques tels que des oxyhydroxydes de Al₂O₃, TiO₂, ZrO₂, P₂O₅, SiO₂, CeO_{2,}, etc., qui favorisent la présence des groupes hydroxyles en surface. C'est le cas du dioxyde de titane qui peut être préalablement traité, par exemple, par Al₂O₃ et/ou SiO₂.

L'invention concerne également plusieurs compositions comprenant des particules selon l'invention et au moins un polymère thermoplastique.

Les compositions comprennent au moins un polymère thermoplastique et des particules traitées par un polyorganosiloxane, le groupement fonctionnel W étant compatible avec le polymère des compositions.

Les polymères thermoplastiques peuvent être par exemple des polyesters, polyamides, polycarbonates, PPS, PEEK, du polystyrène, du chlorure de polyvinyle, de l'alcool polyvinylique, les copolymères styrène-acrylonitrile, acrylonitrile-butadiènestyrène (ABS), les polymères acryliques notamment le polyméthacrylate de méthyle, les polyoléfines telles que le polyéthylène, le polypropylène, le polybutène, le polyméthylpentène, les dérivés cellulosiques, tels que par exemple l'acétate de cellulose, l'acéto-butyrate de cellulose, l'éthylcellulose, les polyamides dont le polyamide 6-6, etc., leurs mélanges ou lesdits polymères fonctionnalisés (fonctions anhydride maléfique, ...), leurs isomères...

Il peut s'agir également des polymères fluorés (PTFE, PVDF), des polycarbonates, des polyimides.

L'invention concerne en particulier une composition comprenant au moins une polyoléfine et des particules traitées par un polyorganosiloxane dont les groupes organiques W sont des groupements alkyles en C₃-C₁₈, de préférence en C₇ - C₁₈.

L'invention concerne notamment une telle composition comprenant au moins une polyoléfine et des particules de pigments traitées par un polyorganosiloxane dont les groupes organiques W sont des groupements alkyles en C₃ - C₁₈, de préférence en C₇-C₁₈, comprenant au moins 70 % en poids de particules, de préférence au moins 75 %, encore plus préférentiellement au moins 80 %. De préférence, le pigment est le dioxyde de titane.

De telles compositions sont des compositions pour mélange-maître.

De telles compositions peuvent aussi comprendre des additifs tels que des lubrifiants, des additifs tenue lumière,... Elles sont obtenues par mélange des particules selon l'invention dans le polymère fondu à l'aide d'une extrudeuse double vis ou d'un mélangeur interne tel que par exemple un plastographe de Brabender.

L'invention concerne en outre l'utilisation des particules dans les polymères thermoplastiques.

L'incorporation des particules selon l'invention peut se faire directement dans les polymères thermoplastiques ou par l'intermédiaire de mélanges maîtres. S'il s'agit de particules de pigments, la concentration des particules selon l'invention dans les polymères thermoplastiques est celle d'un pigment classique : elle est de l'ordre de 0,1 à 20 % en poids par rapport aux polymères thermoplastiques.

L'invention concerne aussi les objets obtenus à partir de polymères thermoplastiques et comprenant des particules selon l'invention.

Les particules selon l'invention peuvent également être utilisées dans des formulations pour peintures solvants ou peinture siliconées (les silicones étant utilisés en tant que liants ou en tant qu'additifs).

Les exemples suivants illustrent l'invention sans en limiter toutefois sa portée.

### EXEMPLES

### EXEMPLE 1

### Préparation d'un premier polyorganosiloxane à fonctionnalités Si-OEt et Si-Octyle

Dans un ballon tricol de 500 ml équipé d'une agitation mécanique, d'un thermomètre, et d'une ampoule de coulée, on charge sous atmosphère d'azote 300 ml d'éthanol préalablement séché sur tamis moléculaire 3 Angstrôm, et 10 µl de catalyseur de KARSTEDT (10 % dans l'hexane). Le mélange est agité à 65°C et on commence à ajouter goutte à goutte le polyméthylhydrosiloxane (40 g, dpₙ = 50). On observe un dégagement d'hydrogène important. La vitesse de coulée du fluide Si-H est réglée pour contrôler le débit d'hydrogène et l'exothermie de la réaction. En fin de coulée, le mélange est laissé pendant une heure sous agitation. On prépare ainsi le polyorganosiloxane à fonctionnalités Si-OEt et Si-H (POS SiOEVSiH), correspondant à la fomule moyenne suivante :

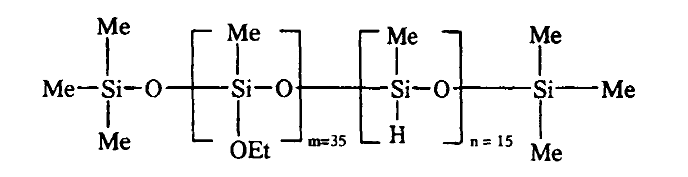

Au mélange réactionnel obtenu, on coule goutte à goutte 36 g d'octène-1. Après addition, on chauffe le mélange réactionnel à 60°C jusqu'à ce que toutes les fonctions Si-H soient consommées. On évapore ensuite l'excès d'alcool et d'octène. On récupère 80 g d'huile limpide et légèrement colorée. L'analyse RMN révèle la structure suivante :

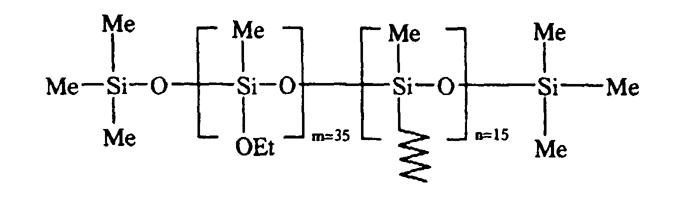

### Traitement de particules de dioxyde de titane

On prépare des particules de dioxyde de titane selon l'invention :
- on part de particules de dioxyde de titane rutile de taille 0,14 µm, préalablement traitées par un traitement inorganique à base d'alumine (1 % en poids par rapport au TiO₂) et de silice (0,6 % en poids par rapport au TiO₂).
- on pulvérise sur les particules de dioxyde de titane le polyorganosiloxane obtenu précédemment en solution dans l'acétate d'éthyle.
- on sèche ensuite les particules obtenues à 110°C pendant 12 h, puis on micronise les particules.

On obtient des particules de dioxyde de titane dont la teneur en poids en polyorganosiloxane est de 1 % exprimé en SiO₂ par rapport au poids des particules de TiO₂ traitées.

### Utilisation des particules traitées dans du polyéthylène basse densité (PEbd).

On fait fondre le polymère à une température de 180°C dans un plastographe interne de type Brabender sous une vitesse de 40 tours/min. Au bout de 10 min, on introduit les particules de dioxyde de titane traitées de manière à ce que la teneur en poids des particules dans le mélange soit de 85 %.

On observe alors que la valeur du couple monte puis redescend à une valeur d'équilibre. Le tracé de la courbe du couple en fonction du temps présente donc au temps 10 min un pic dit pic d'énergie d'incorporation.

L'énergie d'incorporation des particules de dioxyde de titane traitées correspond à l'intégrale de ce pic en prenant comme ligne de base la valeur du couple final à l'équilibre après incorporation du titane.

Cette énergie est dans le cadre de cet exemple de 6 J.

### EXEMPLE 2

### Préparation d'un polyorganosiloxane à fonctionnalités Si-OEt et Si-vinylcyclohexényle

On procède comme à l'exemple 1, mais on remplace l'octène-1 par du vinyl-4 cyclohexène-1.

Les quantités de réactifs utilisés sont les suivantes :
- POS SiOEt/SiH = 100 g
- vinyl-4 cyclohexène-1 = 39,16 g
- catalyseur Karstedt initial = 10 mg.

La température du milieu réactionnel est maintenue à environ 80 - 85 °C.

On récupère 130 g d'une huile limpide légèrement jaunie de formule :

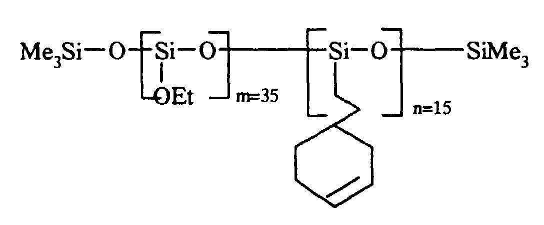

### Traitement de particules de dioxyde de titane

On traite les mêmes particules de dioxyde de titane que dans l'exemple 1 par ce polyorganosiloxane fonctionnalisé selon la même méthode que dans l'exemple 1 de façon à ce que l'on obtienne des particules de dioxyde de titane dont la teneur en poids en polyorganosiloxane est de 2 % exprimé en SiO₂ par rapport aux particules de TiO₂ traitées.

### Utilisation des particules traitées dans du polyéthylène basse densité (PEbd).

On fait fondre le PEbd à une température de 180°C dans un plastographe interne de type Brabender sous une vitesse de 40 tours/min. Au bout de 10 min, on introduit les particules de dioxyde de titane traitées jusqu'à ce que leur teneur en poids dans le mélange atteigne 85 %.

Selon la méthode de l'exemple 1, on mesure une énergie d'incorporation de 3 J.

### EXEMPLE COMPARATIF 3

### Traitement de particules de dioxyde de titane

On traite les mêmes particules de dioxyde de titane que dans l'exemple 1 par du polydiméthylsiloxane (PDMS)(Rhodorsil 47V50 commercialisé par Rhone-Poulenc) selon la même méthode que dans l'exemple 1 de façon à ce que l'on obtienne des particules de dioxyde de titane dont la teneur en poids en PDMS est de 0,5 % exprimé en SiO₂ par rapport aux particules de TiO₂ traitées.

### Utilisation des particules traitées dans du polyéthylène basse densité (PEbd).

On fait fondre le PEbd à une température de 180°C dans un plastographe interne de type Brabender sous une vitesse de 40 tours/min. Au bout de 10 min, on introduit les particules de dioxyde de titane traitées jusqu'à ce que leur teneur en poids dans le mélange atteigne 85 %.

Selon la méthode de l'exemple 1, on mesure une énergie d'incorporation de 45 J.

## Revendications

1. Particules minérales, à l'exception de la silice, caractérisées en ce qu'elles comprennent au moins un polyorganosiloxane fonctionnalisé greffé sur tout ou partie de leur surface, ledit polyorganosiloxane comprend, par molécule :
- α - d'une part, au moins un motif siloxyle fonctionnel de formule **(l)** :
**(I)** Rₐ Y Si (O)_{(3-a)/2}
dans laquelle
* a = 0 ou 1 et de préférence 1,
* R est un radical hydrocarboné monovalent choisi parmi les alkyles linéaires ou ramifiés, ayant de 1 à 6 atomes en particulier le méthyle, l'éthyle, le propyle le butyle et/ou parmi les aryles et en particulier le phényle, le méthyle étant plus particulièrement préféré, les radicaux R étant identiques ou différents quand a = 2.
* Y est un radical alcoxyle linéaire ou ramifié choisi, de préférence, parmi les alcoxyles en C₁-C₁₅, en particulier C₁-C₆ le méthoxyle, l'éthoxyle et le(iso)propoxyle étant plus particulièrement retenus,
- β - et d'autre part, au moins un motif siloxyle fonctionnel de formule **(II)** :
**(II)** R_{b} W Si (O)_{(3-b)/2}
dans laquelle
* b = 0,1 ou 2,
* R répond à la même définition que celle donnée supra pour le substituant R du motif **(I)** et peut être identique ou différent de ce dernier,
* W est un radical hydrocarboné monovalent contenant éventuellement des atomes de S et/ou O et constituant un reste fonctionnel, relié au silicium par une liaison Si-C,
ce reste étant choisi parmi les groupes suivants :
**(i)** un groupe alkyle, linéaire ou ramifié, comprenant au moins 7 atomes de carbone,
**(2i)** un groupe alkényle en C₂-C₂₀, linéaire ou ramifié, comportant une ou plusieurs doubles liaisons dans la (ou les) et/ou en extrémité(s) de chaîne(s), lesdites doubles liaisons étant de préférence conjuguées et/ou associées à au moins un groupement activateur situé en α et avantageusement constitué par un étheroxyde ou un thioéther,
**(3i)** un groupe mono ou bicyclique aliphatique insaturé comportant 5 à 20 atomes de carbone cycliques et une ou deux double(s) liaison(s) éthyléniques dans le cycle éventuellement substituée(s) par un ou deux groupe(s) alkyle(s) linéaire(s) ou ramifiée(s) en C₁-C₃, ledit groupe cyclique étant éventuellement relié au silicium par l'intermédiaire d'un radical alkylène linéaire ou ramifié en C₂-C₁₀,
**(4i)** un groupe mercaptoalkyle de formule :
―R¹―S―A (4i)
dans laquelle
* R¹ représente un radical alkylène en C₂-C₁₀, linéaire ou ramifié, comprenant éventuellement au moins un hétéroatome oxygéné ou un radical alkylène-cycloalkylène dont la partie alkylène a la même définition que celle donnée juste ci-avant et la partie cyclique comporte 5 à 10 atomes de carbone et est éventuellement substituée par un ou deux groupe(s) alkyle(s) linéaire(s) ou ramifié(s) en C₁-C₃,
* A correspond :
→ soit à l'hydrogène,
→ soit à un groupement M masquant relié à S par une liaison labile dans des conditions données et permettant le remplacement de M par H ou la création d'une espèce active -R¹-S·;
**(5i)** un groupe comprenant une entité polysulfurique et répondant à la formule suivante :
―R²―(-S-)ₓ―R³ (5i)
avec
* x = 1 à 6,
* R² ayant la définition que R supra,
* R³ est un alkyle en C₁-C₁₀ linéaire ou ramifié,
**(6i)** un groupe comportant au moins un cycle, dont au moins l'un des éléments est un atome de soufre, et répondant aux formules ci-dessous : 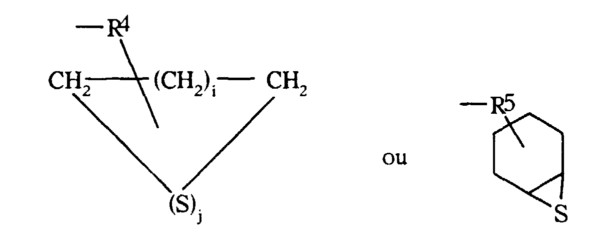 dans lesquelles
* i = 0,1 ou 2 et j = 1 à 6
* les substituants R⁴ et R⁵ sont des radicaux divalents tels que définis supra pour R,
**(7i)** un groupe sulfoxyde de formule : 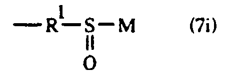 dans laquelle le symbole R¹ et M ont les définitions données ci-avant pour la formule (4i) ;
- y - et éventuellement au moins un motif résiduel siloxyle de formule **(III)**:
**(III)** R_{c} Hd Si (O)_{(4-(c+d))/2}
dans laquelle
* c = 0, 1, 2 ou 3, d = 0 ou 1 et c + d ≤ 3
* les substituants R étant tels que définis ci-dessus dans les motifs **(I)** et **(II)**.

2. Particules selon la revendication 1, caractérisées en ce que le groupe organique W du motif **(Il)** du polyorganosiloxane fonctionnalisé est choisi parmi les radicaux suivants :
- un radical alkyle (i) comprenant de 8 à 30 atomes de carbone et choisi de préférence parmi les radicaux alkyles suivants : octyle, dodécyle, undécyle, tridécyle ;
- un radical (2i) en C₆-C₁₀, comportant une double liaison, et éventuellement une autre conjuguée à la première, ledit radical étant avantageusement l'hexènyle ou le dodécènyle;
- un radical (3i) monocyclique en C₅-C₆, de préférence le cyclohexènyle ou le méthyl-1 cyclohexène-1 yle, éventuellement relié au silicium par l'intermédiaire d'un radical alkylène linéaire ou ramifié en C₂-C₆, de préférence -CH₂-CH₂-, -CH₂-CH(CH₃)-, -(CH₂)₃-.

3. Particules selon l'une quelconque des revendications 1 ou 2, caractérisées en ce que le polyorganosiloxane fonctionnalisé est constitué par un copolymère linéaire, statistique, séquencé ou à blocs, de formule moyenne suivante **(lV)** : 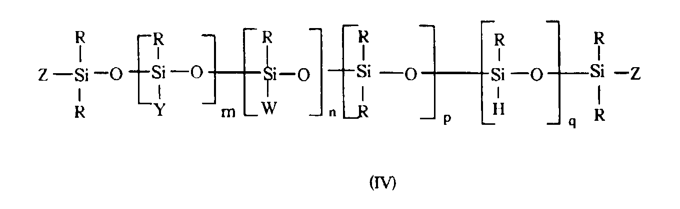 dans laquelle :
- les symboles Y, W et R sont tels que définis dans les revendications 1 et 2,
- le symbole Z est un radical monovalent choisi parmi les radicaux formés par l'hydrogène et parmi ceux répondant aux définitions de R, Y et W,
- la somme m + n + p + q ≥ 3, de préférence comprise entre 3 et 100 ; le cas de figure dans lequel p = q = 0, m ≥ 1 et n ≤ 50 étant plus particulièrement préféré,
- 0 < m ≤ 100, de préférence 1 ≤ m ≤ 50
- 0 < n ≤ 100, de préférence 1 ≤ n ≤ 50
- 0 ≤ p ≤ 20, de préférence 0 ≤ p ≤ 10
- 0 ≤ q ≤ 40, de préférence 0 ≤ q ≤ 20

4. Particules selon l'une quelconque des revendications 1 ou 2 caractérisées en ce que le polyorganosiloxane fonctionnalisé est constitué par un copolymère cyclique de formule moyenne suivante **(V)** : 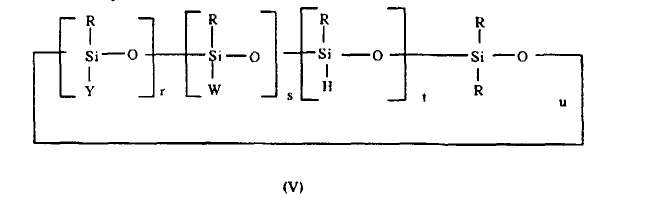 dans laquelle Y, W et R sont tels que définis dans les revendications 1 et 2, et avec r, s, t et u représentant des nombres entiers ou décimaux positifs :
- la somme r + s + t + u ≥ 3, de préférence comprise entre 3 et 8, le cas de figure dans lequel t = u = 0 étant plus particulièrement préféré,
- 1 ≤ r ≤ 8, de préférence 1 ≤ r ≤ 4
- 1 ≤ s ≤ 8, de préférence 1 ≤ s ≤ 4
- 0 ≤ t ≤ 8, de préférence 0 ≤ t ≤ 4
- 0 ≤ u ≤ 8, de préférence 0 ≤ u ≤ 4.

5. Particules selon l'une quelconque des revendications précédentes, caractérisées en ce que la teneur en poids en polyorganosiloxane fonctionnalisé, exprimée en SiO₂, est d'au moins 0,1 % par rapport au poids des particules traitées, de préférence d'au plus 5 %.

6. Particules selon l'une quelconque des revendications précédentes, caractérisées en ce que particules minérales sont des monoparticules de même nature chimique

7. Particules selon l'une quelconque des revendications précédentes, caractérisées en ce qu'il s'agit de pigments.

8. Particules selon la revendication 7, caractérisées en ce qu'il s'agit de particules de dioxyde de titane ou/et de particules de sulfures de terres rares.

9. Particules selon l'une quelconque des revendications précédentes, caractérisées en ce qu'il s'agit de particules de dioxyde de titane de taille comprise entre 0,2 et 0,4 µm.

10. Procédé de préparation de particules selon l'une quelconque des revendications précédentes caractérisé en ce que :
- on met en suspension des particules minérales dans le polyorganosiloxane fonctionnalisé,
- on filtre les particules,
- on sèche, et on micronise éventuellement, les particules.

11. Procédé de préparation de particules selon l'une quelconque des revendications 1 à 9 caractérisé en ce que :
- on pulvérise le polyorganosiloxane fonctionnalisé sur des particules minérales,
- on sèche, et on micronise éventuellement, les particules.

12. Procédé de préparation de particules selon l'une quelconque des revendications 1 à 9 caractérisé en ce qu'on micronise des particules minérales en introduisant le polyorganosiloxane fonctionnalisé dans les buses de micronisation.

13. Procédé de préparation de particules selon l'une quelconque des revendications 10, 11 ou 12, caractérisé en ce que les particules minérales à traiter par le polyorganosiloxane fonctionnalisé présentent un traitement de surface à base d'oxyhydroxydes de Al₂O₃, TiO₂, ZrO₂, P₂O₅, SiO₂, et/ou CeO₂.

14. Composition caractérisée en ce qu'elle comprend au moins une polyoléfine et des particules selon l'une quelconque des revendications 1 à 9, le polyorganosiloxane fonctionnel greffé à la surface des particules présentant au moins un groupe organique W alkyle en C₇ - C₁₈.

15. Composition selon la revendication 14 caractérisée en ce qu'elle comprend au moins 70 % en poids de particules de dioxyde de titane.

16. Utilisation dans les polymères thermoplastiques des particules selon l'une quelconque des revendications 1 à 9.

17. Objet obtenus à partir de polymères thermoplastiques caractérisé en ce qu'il comprend des particules selon l'une quelconque des revendications 1 à 9.

18. Utilisation des particules selon l'une quelconque des revendications 1 à 9 dans des formulations pour peinture.

## Patentansprüche

1. Mineralische Teilchen, mit Ausnahme von Kieselsäure, dadurch gekennzeichnet, daß sie mindestens ein funktionell wirksam gemachtes Polyorganosiloxan enthalten, das auf ihrer gesamten oder einem Teil ihrer Oberfläche aufgepfropft ist, wobei das genannte Polyorganosiloxan pro Molekül enthält:
- α- einerseits mindestens eine funktionelle Siloxyleinheit der Formel (I):
(I) Rₐ Y Si (O)_{(3-a)/2}
in der
* a = 0 oder 1 und vorzugsweise 1 ist,
* R ein einwertiger Kohlenwasserstoffrest ist, der aus den linearen oder verzweigten Alkylresten mit 1 bis 6 Atomen, besonders Methyl, Ethyl, Propyl oder Butyl, und/oder aus den Arylresten, besonders Phenyl gewählt ist, wobei Methyl ganz besonders bevorzugt wird und die Reste R gleich oder unterschiedlich sind, wenn a = 2 ist,
* Y ein linearer oder verzweigter Alkoxyrest ist, der vorzugsweise aus den Alkoxyresten mit C₁-C₁₅, insbesondere C₁-C₆ gewählt ist, wobei Methoxy, Ethoxy und (Iso)propoxy ganz besonders berücksichtigt werden;
- β- andererseits mindestens eine funktionelle Siloxyleinheit der Formel (II):
(II) R_{b} W Si (O)_{(3-b)/2}
in der
* b = 0, 1 oder 2 ist,
* R derselben Definition entspricht, wie sie oben für den Substituenten R der Einheit (I) gegeben wurde, und gleich oder verschieden zu letzterem sein kann,
* W ein einwertiger Kohlenwasserstoffrest ist, der gegebenenfalls S- und/ oder O-Atome enthält und einen funktionellen Rest bildet, der durch eine Si-C-Bindung an das Silicium gebunden ist, wobei dieser Rest aus den folgenden Gruppen gewählt ist:
(i) einer linearen oder verzweigten Alkylgruppe mit mindestens 7 Kohlenstoffatomen,
(2i) einer linearen oder verzweigten Alkenylgruppe mit C₂-C₂₀ mit einer oder mehreren Doppelbindungen in der oder den Kette(n), und/oder an ihrem/ihren Ende(n), wobei die genannten Doppelbindungen vorzugsweise konjugiert und/oder an mindestens eine in α-Stellung gelegene Aktivatorgruppe gebunden sind und vorteilhafterweise aus einem Etheroxid oder einem Thioether bestehen,
(3i) einer mono- oder bicyclischen aliphatischen ungesättigten Gruppe mit 5 bis 20 cyclischen Kohlenstoffatomen und einer oder zwei Ethylen-Doppelbindung(en) im Ring und gegebenenfalls substituiert mit einer oder zwei linearen oder verzweigten Alkylgruppe(n) mit C₁-C₃, wobei die genannte cyclische Gruppe gegebenenfalls durch einen linearen oder verzweigten Alkylenrest mit C₂-C₁₀ an das Silicium gebunden ist,
(4i) einer Mercaptoalkylgruppe der Formel:
-R¹-S-A (4i)
in der
* R¹ einen linearen oder verzweigten Alkylenrest mit C₂-C₁₀ bedeutet, der gegebenenfalls ein Sauerstoff-Heteroatom oder einen Alkylen-Cycloalkylen-Rest aufweist, dessen Alkylenteil derselben Definition entspricht, wie sie unmittelbar zuvor gegeben wurde, und dessen cyclischer Teil 5 bis 10 Kohlenstoffatome enthält und gegebenenfalls mit einer oder zwei linearen oder verzweigten Alkylgruppe(n) mit C₁-C₃ substituiert ist,
* A entspricht:
→ entweder Wasserstoff,
→ oder einer maskierenden Gruppe M, die mit S durch eine unter den gegebenen Bedingungen unbeständige Bindung verbunden ist und die den Austausch von M durch H oder die Bildung einer aktiven Spezies -R¹-S· erlaubt;
(5i) einer Gruppe, die eine Polysulfideinheit enthält und der folgenden Formel entspricht:
-R²-(-S-)ₓ-R³ (5i)
in der
* x = 1 bis 6 ist,
* R² der Definition des obigen R entspricht,
* R³ ein lineares oder verzweigtes Alkyl mit C₁-C₁₀ ist;
(6i) einer Gruppe, die mindestens einen Ring enthält, in dem mindestens eins der Elemente ein Schwefelatom ist, und die den folgenden Formeln entspricht: 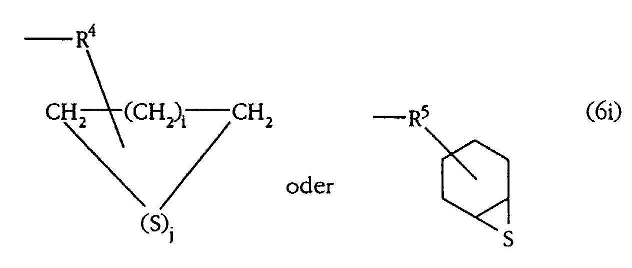 in denen
* i = 0, 1 oder 2 und j = 1 bis 6 ist,
* die Substituenten R⁴ und R⁵ zweiwertige Reste sind, wie dies oben für R definiert wurde;
(7i) einer Sulfoxidgruppe der Formel: 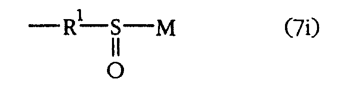 in der die Symbole R¹ und M die zuvor für die Formel (4i) gegebenen Definitionen haben;
- γ- gegebenenfalls mindestens eine restliche Siloxyleinheit der Formel (III):
(III) R_{c} H_{d} Si (O)_{(4-(c+d))/2}
in der
* c = 0, 1, 2 oder 3, d = 0 oder 1 und c + d ≤ 3 ist,
* die Substituenten R so sind, wie zuvor in den Einheiten (I) und (II) definiert.

2. Teilchen nach Anspruch 1, dadurch gekennzeichnet, daß die organische Gruppe W der Einheit (II) des funktionell wirksam gemachten Polyorganosiloxans aus den folgenden Resten gewählt ist:
- einem Alkylrest (i) mit 8 bis 30 Kohlenstoffatomen, der vorzugsweise aus den folgenden Alkylresten gewählt ist: Octyl, Dodecyl, Undecyl, Tridecyl;
- einem C₆-C₁₀-Rest (2i), der eine Doppelbindung enthält und gegebenenfalls eine weitere zur ersten konjugierten, wobei der genannte Rest vorteilhafterweise Hexenyl oder Dodecenyl ist;
- einem monocyclischen C₅-C₆-Rest (3i), vorzugsweise Cyclohexenyl oder Methyl-1-cyclohexen-1-yl, der gegebenenfalls an das Silicium über einen linearen oder verzweigten C₂-C₆-Alkylenrest gebunden ist, vorzugsweise -CH₂-CH₂-, -CH₂-CH(CH₃)-, -(CH₂)₃-.

3. Teilchen nach irgendeinem der Ansprüche 1 oder 2, dadurch gekennzeichnet, daß das funktionell wirksam gemachte Polyorganosiloxan aus einem linearen, statistischen sequenzierten oder Block-Copolymeren der folgenden Durchschnittsformel (IV) gebildet ist: 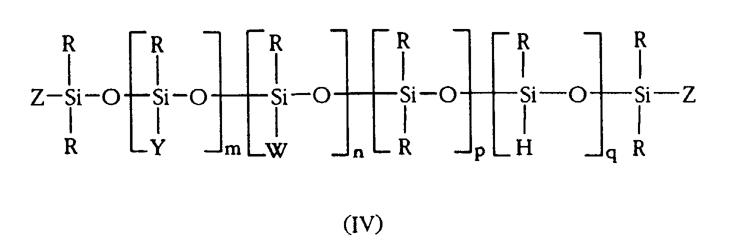 in der:
- die Symbole Y, W und R so wie in den Ansprüchen 1 und 2 definiert sind,
- das Symbol Z ein einwertiger Rest ist, der aus den Resten Wasserstoff und denen, die den Definitionen für R, Y und W entsprechen, gewählt ist,
- die Summe m + n + p + q ≥ 3 ist und vorzugsweise zwischen 3 und 100 liegt, wobei der dargestellte Fall ganz besonders bevorzugt wird, in dem p = q = 0, m ≥ 1 und n ≤ 50,
- 0 < m ≤ 100 und vorzugsweise 1 ≤ m ≤ 50,
- 0 < n ≤ 100 und vorzugsweise 1 ≤ n ≤ 50,
- 0 ≤ p ≤ 20 und vorzugsweise 0 ≤ p ≤ 10,
- 0 ≤ q ≤ 40 und vorzugsweise 0 ≤ q ≤ 20 ist.

4. Teilchen nach irgendeinem der Ansprüche 1 oder 2, dadurch gekennzeichnet, daß das funktionell wirksam gemachte Polyorganosiloxan aus einem cyclischen Copolymeren der folgenden Durchschnittsformel (V) gebildet ist: 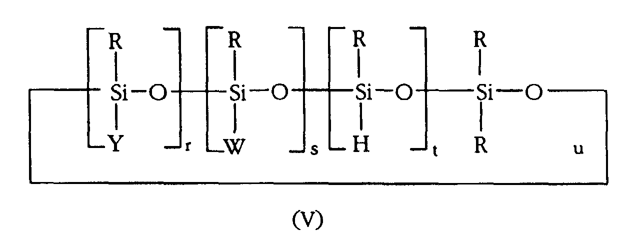 in der Y, W und R so wie in den Ansprüchen 1 und 2 definiert sind, wobei r, s, t und u positive ganze oder dezimale Zahlen bedeuten und:
- die Summe r + s + t + u ≥ 3 ist und vorzugsweise zwischen 3 und 8 liegt, wobei der dargestellte Fall ganz besonders vorgezogen wird, in dem t = u = 0 ist,
- 1 ≤ r ≤ 8 und vorzugsweise 1 ≤ r ≤ 4,
- 1 ≤ s ≤ 8 und vorzugsweise 1 ≤ s ≤ 4,
- 0 ≤ t ≤ 8 und vorzugsweise 0 ≤ t ≤ 4,
- 0 ≤ u ≤ 8 und vorzugsweise 0 ≤ u ≤ 4 ist.

5. Teilchen nach irgendeinem der vorangehenden Ansprüche, dadurch gekennzeichnet, daß der Gewichtsanteil am funktionell wirksam gemachten Polyorganosiloxan, ausgedrückt als SiO₂, mindestens 0,1 % und vorzugsweise höchstens 5 %, bezogen auf das Gewicht der behandelten Teilchen, ist.

6. Teilchen nach irgendeinem der vorangehenden Ansprüche, dadurch gekennzeichnet, daß die mineralischen Teilchen Monopartikel der selben chemischen Art sind.

7. Teilchen nach irgendeinem der vorangehenden Ansprüche, dadurch gekennzeichnet, daß es sich dabei um Pigmente handelt.

8. Teilchen nach Anspruch 7, dadurch gekennzeichnet, daß es sich dabei um Titandioxidteilchen oder/und Lantanoidsulfidteilchen handelt.

9. Teilchen nach irgendeinem der vorangehenden Ansprüche, dadurch gekennzeichnet, daß es sich dabei um Titandioxidteilchen einer Größe zwischen 0,2 und 0,4 µm handelt.

10. Verfahren zur Herstellung von Teilchen nach irgendeinem der vorangehenden Ansprüche, dadurch gekennzeichnet, daß:
- man die mineralischen Teilchen im funktionell wirksam gemachten Polyorganosiloxan suspendiert,
- man die Teilchen abfiltert,
- man die Teilchen trocknet und gegebenenfalls mikronisiert.

11. Verfahren zur Herstellung von Teilchen nach irgendeinem der Ansprüche 1 bis 9, dadurch gekennzeichnet, daß:
- man das funktionell wirksam gemachte Polyorganosiloxan auf den mineralischen Teilchen zerstäubt,
- man die Teilchen trocknet und gegebenenfalls mikronisiert.

12. Verfahren zur Herstellung von Teilchen nach irgendeinem der Ansprüche 1 bis 9, dadurch gekennzeichnet, daß man mineralische Teilchen mikronisiert, indem das funktionell wirksam gemachte Polyorganosiloxan in Mikronisierdüsen gegeben wird.

13. Verfahren zur Herstellung von Teilchen nach irgendeinem der Ansprüche 10, 11 oder 12, dadurch gekennzeichnet, daß die mineralischen und durch das funktionell wirksam gemachte Polyorganosiloxan zu behandelnden Teilchen eine Oberflächenbehandlung auf der Grundlage von Oxyhydroxiden von Al₂O₃-, TiO₂-, ZrO₂-, P₂O₅-, SiO₂- und/oder CeO₂ darstellen.

14. Zusammensetzung, dadurch gekennzeichnet, daß sie mindestens ein Polyolefin und Teilchen nach irgendeinem der Ansprüche 1 bis 9 enthält, wobei das funktionelle, auf die Oberfläche der Teilchen aufgepfropfte Polyorganosiloxan mindestens eine organische C₇-C₁₈-Alkylgruppe W hat.

15. Zusammensetzung nach Anspruch 14, dadurch gekennzeichnet, daß sie mindestens 70 Gew.-% an Titandioxidteilchen enthält.

16. Verwendung von Teilchen nach irgendeinem der Ansprüche 1 bis 9 in thermoplastischen Polymeren.

17. Aus thermoplastischen Polymeren erhaltener Gegenstand, dadurch gekennzeichnet, daß er Teilchen nach irgendeinem der Ansprüche 1 bis 9 enthält.

18. Verwendung von Teilchen nach irgendeinem der Ansprüche 1 bis 9 in Farbrezepturen.

## Claims

1. Inorganic particles, with the exception of silica, characterized in that they comprise at least one functionalized polyorganosiloxane grafted over all or part of their surface, the said polyorganosiloxane comprising, per molecule:
- α - on the one hand, at least one functional siloxy unit of formula (I):
(I) RₐYSi(O)_{(3-a)/2}
in which:
* a = 0 or 1, and preferably 1,
* R is a monovalent hydrocarbon radical chosen from linear or branched alkyls having from 1 to 6 atoms, in particular methyl, ethyl, propyl or butyl, and/or from aryls, and in particular phenyl, methyl being more particularly preferred, the R radicals being identical or different when a = 2,
* Y is a linear or branched alkoxy radical preferably chosen from C₁-C₁₅ alkoxys, in particular C₁-C₆ alkoxys, methoxy, ethoxy and (iso)propoxy being more particularly used,
- β - and, on the other hand, at least one functional siloxy unit of formula (II) :
(II) R_{b}WSi(O)_{(3-b)/2}
in which:
* b = 0, 1 or 2,
* R corresponds to the same definition as that given above for the R substituent of the unit (I) and can be identical to or different from the latter,
* W is a monovalent hydrocarbon radical optionally containing S and/or 0 atoms and constituting a functional residue connected to the silicon via an Si-C bond,
this residue being chosen from the following groups:
(i) a linear or branched alkyl group comprising at least 7 carbon atoms,
(2i) a linear or branched C₂-C₂₀ alkenyl group containing one or a number of double bonds in the chain(s) and/or at the chain end(s), the said double bonds preferably being conjugated and/or combined with at least one activating group situated in the α-position and advantageously consisting of an ether or a thioether,
(3i) an unsaturated mono- or bicyclic aliphatic group containing 5 to 20 cyclic carbon atoms and one or two ethylenic double bond(s) in the ring, which double bond(s) is/are optionally substituted by one or two linear or branched C₁-C₃ alkyl group(s), the said cyclic group optionally being connected to the silicon via a linear or branched C₂-C₁₀ alkylene radical,
(4i) a mercaptoalkyl group of formula:
-R¹-S-A (4i)
in which:
* R¹ represents a linear or branched C₂-C₁₀ alkylene radical optionally comprising at least one oxygen heteroatom or one alkylene-cycloalkylene radical, the alkylene part of which has the same definition as that given immediately above and the cyclic part of which contains 5 to 10 carbon atoms and is optionally substituted by one or two linear or branched C₁-C₃ alkyl group(s),
* A corresponds:
→ either to hydrogen,
→ or to a masking group M connected to S by a bond which is labile under given conditions and which makes possible the replacement of M by H or the creation of an active species -R¹-S-;
(5i) a group comprising a polysulphide entity and corresponding to the following formula:
- R²―(-S-)ₓ―R³ (5i)
with:
* x = 1 to 6,
* R² having the definition as R above,
* R³ is a linear or branched C₁-C₁₀ alkyl,
(6i) a group containing at least one ring, at least one of the elements of which is a sulphur atom, and corresponding to the formulae below: 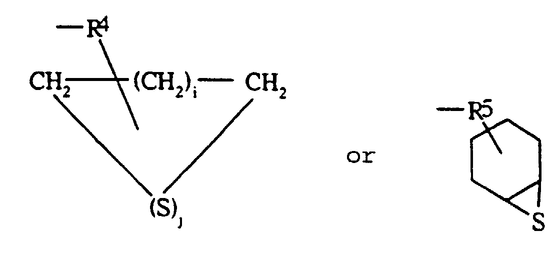 in which
* i = 0, 1 or 2 and j = 1 to 6
* the R⁴ and R⁵ substituents are divalent radicals as defined above for R,
(7i) a sulphoxide group of formula: 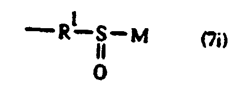
in which the R¹ and M symbols have the definitions given above for the formula (4i);
- γ - and, optionally, at least one residual siloxy unit of formula (III):
(III) R_{c}H_{d}Si(O)_{(4-(c+d))/2}
in which:
* c = 0, 1, 2 or 3, d = 0 or 1 and c + d ≤ 3
* the R substituents being as defined above in the units (I) and (II).

2. Particles according to claim 1, characterized in that the W organic group of the unit (II) of the functionalized polyorganosiloxane is chosen from the following radicals:
- an alkyl radical (i) comprising from 8 to 30 carbon atoms and preferably chosen from the following alkyl radicals: octyl, dodecyl, undecyl or tridecyl;
- a C₆-C₁₀ radical (2i) containing a double bond and optionally another conjugated to the first, the said radical advantageously being hexenyl or dodecenyl;
- a monocyclic C₅-C₆ radical (3i), preferably cyclohexenyl or 1-methylcyclohex-1-enyl, optionally connected to the silicon via a linear or branched C₂-C₆ alkylene radical, preferably -CH₂-CH₂-, -CH₂-CH(CH₃)- or - (CH₂)₃-.

3. Particles according to either one of claims 1 and 2, characterized in that the functionalized polyorganosiloxane is composed of a statistical, sequential or block linear copolymer of following average formula (IV): 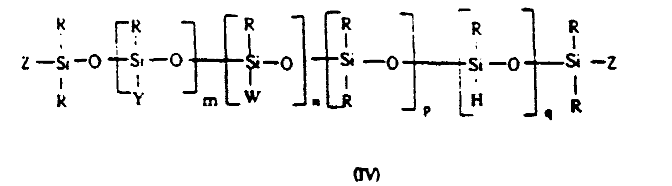 in which:
- the Y, W and R symbols are as defined in claims 1 and 2,
- the Z symbol is a monovalent radical chosen from the radicals formed by hydrogen and from those corresponding to the definitions R, Y and W,
- the sum m + n + p + q ≥ 3, preferably of between 3 and 100; the case in which p = q = 0, m ≥ 1 and n ≤ 50 being more particularly preferred,
- 0 < m ≤ 100, preferably 1 ≤ m ≤ 50
- 0 < n ≤ 100, preferably 1 ≤ n ≤ 50
- 0 ≤ p ≤ 20, preferably 0 ≤ p ≤ 10
- 0 ≤ q ≤ 40, preferably 0 ≤ q ≤ 20.

4. Particles according to either one of claims 1 and 2, characterized in that the functionalized polyorganosiloxane is composed of a cyclic copolymer of following average formula (V): 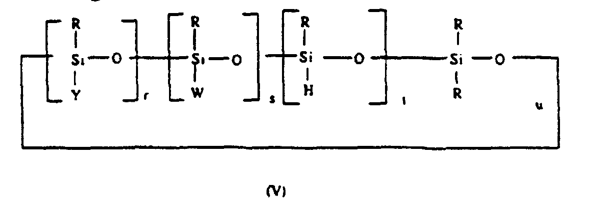 in which Y, W and R are as defined in claims 1 and 2 and with .r, s, t and u representing integers or positive decimals:
- the sum r + s + t + u ≥ 3, preferably of between 3 and 8, the case in which t = u = 0 being more particularly preferred,
- 1 ≤ r ≤ 8, preferably 1 ≤ r ≤ 4
- 1 ≤ s ≤ 8, preferably 1 ≤ s ≤ 4
- 0 ≤ t ≤ 8, preferably 0 ≤ t ≤ 4
- 0 ≤ u ≤ 8, preferably 0 ≤ u ≤ 4.

5. Particles according to any one of the preceding claims, characterized in that the content by weight of functionalized polyorganosiloxane, expressed as SiO₂, is at least 0.1 % with respect to the weight of the treated particles, preferably at most 5 %.

6. Particles according to any one of the preceding claims, characterized in that inorganic particles are monoparticles of the same chemical nature.

7. Particles according to any one of the preceding claims, characterized in that they relate to pigments.

8. Particles according to Claim 7, characterized in that they relate to particles of titanium dioxide and/or to particles of rare-earth metal sulphides.

9. Particles according to any one of the preceding claims, characterized in that they relate to titanium dioxide particles with a size of between 0.2 and 0.4 µm.

10. Process for the preparation of particles according to any one of the preceding claims, characterized in that:
- inorganic particles are suspended in the functionalized polyorganosiloxane,
- the particles are filtered off,
- the particles are dried and optionally micronized.

11. Process for the preparation of particles according to any one of claims 1 to 9, characterized in that:
- the functionalized polyorganosiloxane is sprayed over inorganic particles,
- the particles are dried and optionally micronized.

12. Process for the preparation of particles according to any one of claims 1 to 9, characterized in that inorganic particles are micronized by introducing the functionalized polyorganosiloxane into micronization nozzles.

13. Process for the preparation of particles according to any one of claims 10, 11 or 12, characterized in that the inorganic particles to be treated with the functionalized polyorganosiloxane exhibit a surface treatment based on oxyhydroxides of Al₂O₃, TiO₂, ZrO₂, P₂O₅, SiO₂ and/or CeO₂.

14. Composition, characterized in that it comprises at least one polyolefin and particles according to any one of claims 1 to 9, the functional polyorganosiloxane grafted to the surface of the particles exhibiting at least one C₇-C₁₈ alkyl W organic group.

15. Composition according to claim 14, characterized in that it comprises at least 70 % by weight of titanium dioxide particles.

16. Use in thermoplastic polymers of the particles according to any one of claims 1 to 9.

17. Item obtained from thermoplastic polymers, characterized in that it comprises particles according to any one of claims 1 to 9.

18. Use of the particles according to any one of claims 1 to 9 in paint formulations.
